# FASCICULE DE BREVET EUROPEEN

(11) **EP 3 223 590 B1**
(45) Date de publication et mention de la délivrance du brevet: **02.01.2019**
(21) Numéro de dépôt: 17162569.2
(22) Date de dépôt: 23.03.2017
(51) Int. Cl.: H05B 33/08

(54) **CIRCUIT OPTOÉLECTRONIQUE COMPRENANT DES DIODES ÉLECTROLUMINESCENTES**
OPTOELEKTRONISCHER SCHALTKREIS, DER ELEKTROLUMINESZENZDIODEN UMFASST
OPTOELECTRONIC CIRCUIT COMPRISING LIGHT-EMITTING DIODES

(30) Priorité: 24.03.2016 FR 1657849
(43) Date de publication de la demande: 27.09.2017
(73) Titulaire: EASII IC, 38000 Grenoble (FR)
(72) Inventeur: GRAS, David, 38130 ECHIROLLES (FR); VALORGE, Olivier, 75019 PARIS (FR)
(74) Mandataire: Delorme, Nicolas

(56) Documents cités:
- US-A1- 2013 307 415
- US-A1- 2013 313 984

## Description

### Domaine

La présente description concerne un circuit optoélectronique, notamment un circuit optoélectronique comprenant des diodes électroluminescentes.

### Exposé de l'art antérieur

Il est souhaitable de pouvoir alimenter un circuit optoélectronique comprenant des diodes électroluminescentes avec une tension variable, par exemple alternative, notamment une tension sinusoïdale, par exemple la tension du secteur. Le circuit optoélectronique peut comprendre des diodes électroluminescentes montées en série. La tension appliquée à l'ensemble des diodes électroluminescentes doit alors être supérieure à la somme des tensions de seuil des diodes électroluminescentes pour que celles-ci émettent de la lumière. En fonctionnement, le circuit optoélectronique peut donc présenter des phases d'absence d'émission de lumière entre deux phases d'émission de lumière lorsque la tension appliquée à l'ensemble des diodes électroluminescentes est inférieure à la somme des tensions de seuil des diodes électroluminescentes. Un observateur peut percevoir cette absence d'émission de lumière, notamment comme un clignotement ou un scintillement, lorsque la durée de chaque phase d'absence d'émission de lumière entre deux phases d'émission de lumière est trop importante.

Pour réduire la durée des phases d'absence d'émission de lumière, il est connu d'utiliser un circuit de commutation des diodes électroluminescentes pour réduire le nombre de diodes électroluminescentes montées en série lorsque la tension appliquée à ces diodes électroluminescentes diminue. Toutefois, ceci ne permet pas de supprimer complètement les phases d'absence d'émission de lumière.

Un circuit pour actionner une pluralité de diodes électroluminescentes est décrit dans US2013/0313983 A1

### Résumé

Un objet d'un mode de réalisation est de pallier tout ou partie des inconvénients des circuits optoélectroniques décrits précédemment.

Un autre objet d'un mode de réalisation est de réduire davantage la durée des phases d'absence d'émission de lumière par le circuit optoélectronique, voire de supprimer les phases d'absence d'émission de lumière par le circuit optoélectronique même en cas d'utilisation d'un gradateur.

Un autre objet d'un mode de réalisation est que le courant alimentant les diodes électroluminescentes varie de façon sensiblement continue.

Ainsi, un mode de réalisation prévoit un circuit optoélectronique destiné à recevoir, entre un premier noeud et un deuxième noeud, une tension variable contenant une alternance de phases positives croissantes et de phase positives décroissantes, le circuit optoélectronique comprenant :
une pluralité de diodes électroluminescentes montées en série entre le premier noeud et un troisième noeud ;
un premier circuit de limitation/régulation du courant monté entre le troisième noeud et le deuxième noeud ;
un circuit de commutation reliant le troisième noeud à au moins certaines diodes électroluminescentes de la pluralité de diodes électroluminescentes ;
un condensateur comprenant des première et deuxième armatures ;
une première diode dont la cathode est connectée à la deuxième armature et dont l'anode est reliée au deuxième noeud ;
une deuxième diode dont l'anode est connectée à la deuxième armature et dont la cathode est reliée au troisième noeud ou à un deuxième circuit de limitation/régulation du courant ;
lorsque la cathode de la deuxième diode est reliée au troisième noeud, une troisième diode dont l'anode est connectée à l'une des diodes électroluminescentes et dont la cathode est connectée à la première armature ; et
lorsque la cathode de la deuxième diode est reliée au troisième noeud, une quatrième diode dont l'anode est connectée à la première armature et dont la cathode est reliée au premier noeud.

Selon un mode de réalisation, la pluralité de diodes électroluminescentes montées en série comprend une première diode électroluminescente dont l'anode est connectée au premier noeud, l'anode de la troisième diode étant connectée à la cathode de la première diode électroluminescente.

Selon un mode de réalisation, le circuit de commutation comprend, pour chaque diode électroluminescente parmi au moins certaines diodes électroluminescentes de la pluralité de diodes électroluminescentes, un circuit de conduction du courant reliant le troisième noeud à la cathode de la diode électroluminescente et adapté à prendre au moins des premier et deuxième états, le circuit de conduction dans le premier état étant moins conducteur électriquement que dans le deuxième état.

Selon un mode de réalisation, le circuit de commutation comprend, en outre, un circuit de conduction du courant reliant le troisième noeud à la cathode de la deuxième diode.

Selon un mode de réalisation, le premier circuit de limitation/régulation du courant comprend une première source de courant adaptée à fournir un courant dont l'intensité dépend d'une consigne.

Selon un mode de réalisation, le circuit optoélectronique comprend un premier circuit adapté à recevoir ladite tension variable et à fournir un signal binaire modulé en largeur d'impulsion.

Selon un mode de réalisation, le circuit optoélectronique comprend un circuit de modulation et de filtrage adapté à recevoir le signal binaire et à fournir la consigne dont la valeur moyenne dépend du rapport cyclique du signal binaire.

Selon un mode de réalisation, le circuit optoélectronique comprend, en outre, un dispositif de réduction de l'impédance vue entre le premier noeud et le deuxième noeud.

Selon un mode de réalisation, le dispositif de réduction d'impédance comprend un troisième circuit de limitation/régulation du courant et un transistor en série avec le troisième circuit de limitation/régulation du courant.

Selon un mode de réalisation, le dispositif de réduction d'impédance comprend un module adapté à commander le transistor à partir de la tension aux bornes du troisième circuit de limitation/régulation du courant.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un circuit optoélectronique comprenant des diodes électroluminescentes ;
la figure 2 est un chronogramme de puissances électriques du circuit optoélectronique de la figure 1 ;
la figure 3 représente un schéma électrique d'un mode de réalisation d'un circuit optoélectronique comprenant des diodes électroluminescentes ;
la figure 4 représente un diagramme de fonctionnement du circuit optoélectronique représenté en figure 3 ;
la figure 5 est une figure analogue à la figure 3 dans un cas particulier et la figure 6 est un chronogramme de courants et de tensions du circuit optoélectronique de la figure 5 ;
la figure 7 est une figure analogue à la figure 3 dans un autre cas particulier et la figure 8 est un chronogramme de courants et de tensions du circuit optoélectronique de la figure 7 ;
la figure 9 est une figure analogue à la figure 3 dans un autre cas particulier et la figure 10 est un chronogramme de courants et de tensions du circuit optoélectronique de la figure 9 ;
les figures 11, 12 et 13 représentent des schémas électriques d'autres modes de réalisation d'un circuit optoélectronique comprenant des diodes électroluminescentes ;
la figure 14 représente un schéma électrique d'un mode de réalisation plus détaillé du circuit optoélectronique représenté en figure 3 ;
la figure 15 représente un diagramme de fonctionnement d'un mode de réalisation d'un procédé de commande du circuit optoélectronique représenté en figure 14 ;
la figure 16 représente un mode de réalisation plus détaillé d'un élément du circuit optoélectronique représenté en figure 14 ;
la figure 17 représente un schéma électrique d'un autre mode de réalisation d'un circuit optoélectronique comprenant des diodes électroluminescentes ;
la figure 18 représente un schéma électrique du circuit optoélectronique représenté en figure 3 et équipé d'un gradateur ;
les figures 19 et 20 sont des chronogrammes de courants et de tensions du circuit optoélectronique de la figure 18 pour deux valeurs d'angle d'ouverture du gradateur ;
les figures 21 et 22 représentent des schémas électriques de modes de réalisation d'un circuit optoélectronique adapté à fonctionner avec un gradateur ;
la figure 23 est un chronogramme de tensions d'un mode de réalisation d'un module du circuit optoélectronique de la figure 21 ou 22 ;
la figure 24 représente un schéma électrique d'un mode de réalisation d'un module du circuit optoélectronique de la figure 21 ou 22 fournissant les signaux du chronogramme de la figure 23 ;
la figure 25 est un chronogramme de tensions d'un mode de réalisation d'un module du circuit optoélectronique de la figure 21 ou 22 ;
la figure 26 représente un schéma électrique d'un mode de réalisation d'un module du circuit optoélectronique de la figure 21 ou 22 fournissant les signaux du chronogramme de la figure 25 ; et
la figure 27 représente un schéma électrique d'un autre mode de réalisation d'un module du circuit optoélectronique de la figure 21 ou 22.

### Description détaillée

Par souci de clarté, de mêmes éléments ont été désignés par de mêmes références aux différentes figures et, de plus, les diverses figures ne sont pas tracées à l'échelle. Sauf précision contraire, les expressions "approximativement", "sensiblement", et "de l'ordre de" signifient à 10 % près, de préférence à 5 % près. De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas. Par ailleurs, dans la présente description, on utilise le terme "connecté" pour désigner une liaison électrique directe, sans composant électronique intermédiaire, par exemple au moyen d'une piste conductrice, et le terme "couplé" ou le terme "relié", pour désigner soit une liaison électrique directe (signifiant alors "connecté") soit une liaison via un ou plusieurs composants intermédiaires (résistance, condensateur, etc.).

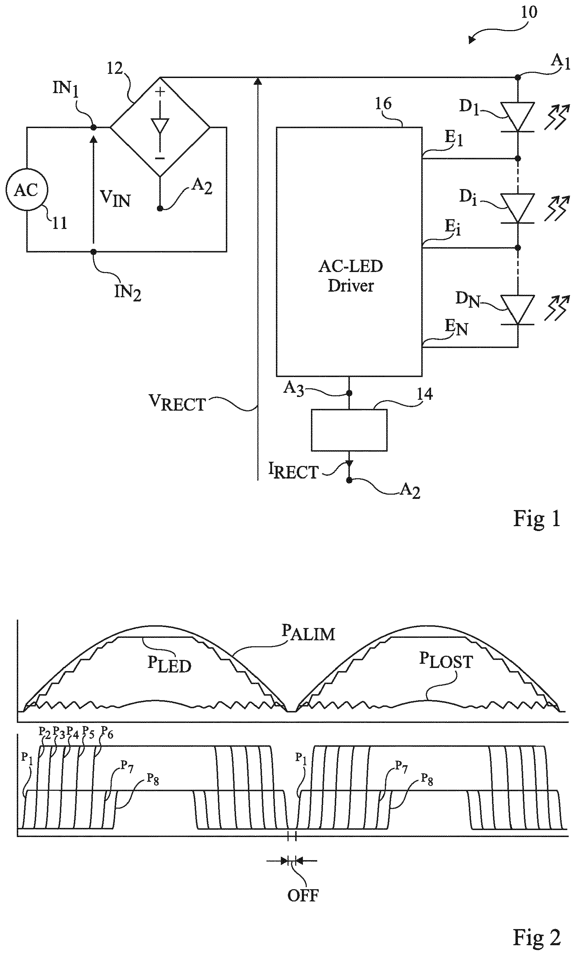

La figure 1 représente un exemple de circuit optoélectronique 10 comprenant des bornes d'entrée IN₁ et IN₂ entre lesquelles est appliquée une tension alternative V_{IN} fournie par une source d'une tension alternative 11. A titre d'exemple, on considère la tension alternative V_{IN} du secteur dans la suite de la description. Le circuit optoélectronique 10 comprend, en outre, un circuit redresseur 12 comportant un pont de diodes, recevant la tension V_{IN} et fournissant une tension V_{RECT} redressée entre des noeuds A₁ et A₂. A titre de variante, le circuit 10 peut recevoir directement une tension redressée, le circuit redresseur 12 pouvant alors ne pas être présent. Le potentiel au noeud A₂ peut correspondre au potentiel de référence bas, par exemple 0 V, par rapport auquel sont référencées les tensions du circuit optoélectronique 10. Dans la suite de la description, on appelle V_{ABS} la tension qui est fournie par le circuit redresseur 12. La tension V_{ABS} est donc sensiblement égale à la valeur absolue de la tension alternative V_{IN}.

Le circuit optoélectronique 10 comprend N ensembles en série de diodes électroluminescentes élémentaires, appelés diodes électroluminescentes globales Dᵢ dans la suite de la description, où i est un nombre entier variant de 1 à N et où N est un nombre entier compris entre 2 et 200. On appelle V_{THi} la tension de seuil de la diode électroluminescente Dᵢ. Chaque diode électroluminescente globale D₁ à D_{N} comprend au moins une diode électroluminescente élémentaire. Chaque diode électroluminescente globale peut être composée de la mise en série et/ou en parallèle d'au moins deux diodes électroluminescentes élémentaires. Dans le présent exemple, les N diodes électroluminescentes globales Dᵢ sont connectées en série, la cathode de la diode électroluminescente globale Dᵢ étant reliée à l'anode de la diode électroluminescente globale Dᵢ₊₁, pour i variant de 1 à N-1. L'anode de la diode électroluminescente globale D₁ est reliée au noeud A₁. Les diodes électroluminescentes globales Dᵢ, i variant de 1 à N, peuvent comprendre le même nombre de diodes électroluminescentes élémentaires ou des nombres différents de diodes électroluminescentes élémentaires.

Le circuit 10 comprend un circuit 14 de régulation/limitation du courant 14, monté entre le noeud A₂ et un noeud A₃. On appelle V_{CS} la tension aux bornes du circuit 14 et I_{CS} le courant circulant entre les noeuds A₃ et A₂. Le circuit 14 correspond, par exemple, à une résistance ou à une source de courant. Le circuit 14 est adapté à limiter et/ou réguler le courant I_{CS}.

Le circuit 10 comprend un circuit 16 de commutation (AC-LED Driver) des diodes électroluminescentes globales Dᵢ, i variant de 1 à N adapté à court-circuiter un nombre plus ou moins important de diodes électroluminescentes globales en fonction de l'évolution de la tension V_{RECT}. Le document US 2012/0056559 décrit un exemple de circuit de commutation. A titre d'exemple, le circuit de commutation 16 est relié au noeud A₃ et comprend N entrées Eᵢ, i variant de 1 à N, chaque entrée Eᵢ étant connectée à la cathode de la diode électroluminescente globale Dᵢ. A titre de variante, le circuit 14 de régulation/limitation du courant peut faire partie du circuit de commutation 16. A titre d'exemple, le circuit de commutation 16 comprend, pour chaque entrée Eᵢ, un circuit de conduction, non représenté, reliant l'entrée Eᵢ au noeud A₃. Chaque circuit de conduction peut fonctionner dans K états de conduction différents, où K est un entier supérieur ou égal à 2. Un état de conduction est un état dans lequel le circuit ne laisse pas passer le courant ou laisse passer le courant avec une résistance qui peut être différente selon l'état considéré. Le nombre de diodes électroluminescentes globales émettant de la lumière peut ainsi augmenter progressivement lors d'une phase de croissance de la tension V_{RECT} et diminue progressivement lors d'une phase de décroissance de la tension V_{RECT}. A titre de variante, le nombre M d'entrées Eᵢ peut être inférieur strictement à N et les cathodes de certaines des diodes électroluminescentes globales Dᵢ peuvent ne pas être connectées au circuit de commutation 16.

Le circuit optoélectronique 10 peut comprendre un circuit, non représenté, qui fournit une tension de référence pour l'alimentation du circuit de limitation/régulation 14, éventuellement obtenue à partir de la tension V_{RECT}. Lorsque le circuit 14 correspond à une source de courant, celle-ci peut être commandée de manière continue par un circuit externe au circuit optoélectronique 10.

La figure 2 représente des chronogrammes, obtenus par simulation pour un circuit optoélectronique 10 ayant la structure représentée en figure 1 et comprenant 8 diodes électroluminescentes globales D₁ à D₈, de la puissance électrique P_{ALIM} fournie par le circuit redresseur 12, de la puissance électrique P_{LED} utilisée par les diodes électroluminescentes globales D₁ à D₈, de la puissance électrique P_{LOST} non consommée par les diodes électroluminescentes globales D₁ à D₈, et des puissances électriques P₁ à P₈ consommée respectivement par les diodes électroluminescentes globales D₁ à D₈ dans le cas où la tension alternative V_{IN} correspond à une tension sinusoïdale. Comme cela apparaît sur la figure 2, les diodes électroluminescentes globales D₁ à D₈ deviennent passantes successivement au cours de chaque phase croissante de la tension V_{RECT} et s'éteignent successivement au cours de chaque phase décroissante de la tension V_{RECT}.

Ceci permet de réduire la durée de chaque phase d'absence d'émission de lumière (phase OFF en figure 2). Toutefois, ces phases d'absence d'émission de lumière ne peuvent pas être totalement supprimées. Un observateur peut percevoir cette absence d'émission de lumière lorsque la durée de chaque phase d'absence d'émission de lumière entre deux phases d'émission de lumière est trop importante. Il serait donc souhaitable de réduire davantage, voire de supprimer complètement les phases d'absence d'émission de lumière.

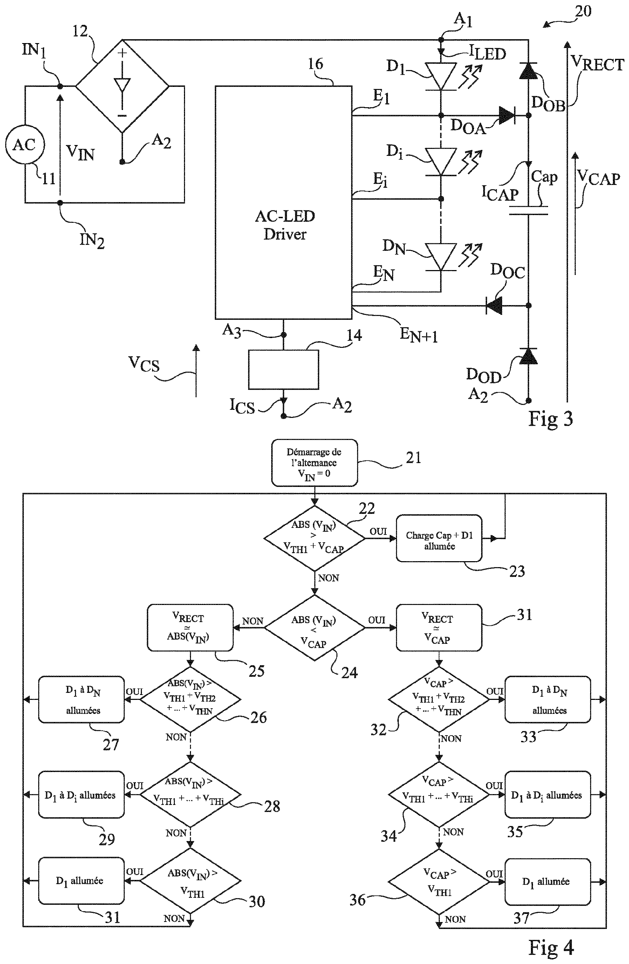

La figure 3 représente un mode de réalisation d'un circuit optoélectronique 20 permettant de réduire davantage, voire de supprimer complètement les phases d'absence d'émission de lumière. Le circuit optoélectronique 20 comprend l'ensemble des éléments du circuit optoélectronique 10 représenté en figure 1 et comprend, en outre, un condensateur Cap et quatre diodes D_{0A}, D_{0B}, D_{0C} et D_{0D}. Dans le présent mode de réalisation, l'anode de la diode D_{0A} est connectée à la cathode de la diode électroluminescente globale D₁ et la cathode de la diode D_{0A} est connectée à une première armature du condensateur Cap. La cathode de la diode D_{0B} est connectée au noeud A₁ et l'anode de la diode D_{0B} est connectée à la première armature du condensateur Cap. La cathode de la diode D_{0C} est connectée à une entrée E_{N+1} du circuit de commutation 16 et l'anode de la diode D_{0C} est connectée à une deuxième armature du condensateur Cap. L'anode de la diode D_{0D} est connectée au noeud A₂ et la cathode de la diode D_{0D} est connectée à la deuxième armature du condensateur Cap. La tension V_{CAP} est la tension entre la première armature et la deuxième armature du condensateur Cap et le courant I_{CAP} est le courant traversant le condensateur Cap. Le circuit de commutation 16 comprend un circuit de conduction, non représenté, reliant l'entrée E_{N+1} au noeud A₃ et pouvant fonctionner dans K états de conduction différents, où K est un entier supérieur ou égal à 2. A titre de variante, le noeud E_{N+1} est directement connecté au noeud A₃. On appelle V_{THD0A}, V_{THD0B}, V_{THD0C} et v_{THD0D} les tensions de seuil respectivement des diodes D_{0A}, D_{0B}, D_{0C} et D_{0D}.

A titre d'exemple, la capacité du condensateur Cap est comprise entre 100 nF et 100 µF. La tension de seuil des diodes D_{0A}, D_{0B}, D_{0C} et D_{0D} est, par exemple, de l'ordre du volt, par exemple 0,7 V.

La figure 4 représente un diagramme de fonctionnement du circuit optoélectronique 20 représenté en figure 3. Le fonctionnement débute au bloc 21 qui correspond au début d'un cycle de variation de la tension V_{IN} lorsque la tension V_{IN} est égale à 0 V.

En fonctionnement, lorsque la valeur absolue de la tension V_{IN} est supérieure à la somme des tensions V_{CAP} et V_{TH1} (test 22), la diode électroluminescente globale D₁ est passante et le condensateur Cap est chargé (bloc 23) par le courant circulant entre les noeuds A₁ et A₃ en passant successivement par la diode électroluminescente globale D₁, la diode D_{0A}, le condensateur Cap et la diode D_{0C}.

En fonctionnement, lorsque la valeur absolue de la tension V_{IN} est comprise entre la somme des tensions V_{CAP}, V_{THD0A} et V_{THD0C} et la somme des tensions V_{CAP}, V_{THD0A} et V_{THD0C} et V_{TH1} (tests 22 et 24), la valeur de la tension rectifiée V_{RECT} est imposée par la source d'alimentation du circuit optoélectronique 20 et est égale à la valeur absolue de la tension V_{IN} diminuée des tensions de seuil des diodes du pont redresseur 12 (bloc 25). Le nombre de diodes électroluminescentes globales qui peuvent émettre de la lumière dépend alors de la valeur absolue de la tension V_{IN}. Si la valeur absolue de la tension V_{IN} est supérieure à la somme des tensions de seuil V_{TH1} à V_{THN} (test 26), les diodes électroluminescentes globales D₁ à D_{N} peuvent émettre de la lumière (bloc 27). De façon générale, si la valeur absolue de la tension V_{IN} est supérieure à la somme des tensions de seuil V_{TH1} à V_{THi} mais inférieure à la somme des tensions de seuil V_{TH1} à U_{THi+1} (tests 26 et 28), seules les diodes électroluminescentes globales D₁ à Dᵢ peuvent émettre de la lumière (bloc 29) . En outre, si la valeur absolue de la tension V_{IN} est seulement supérieure à la tension de seuil V_{TH1} (test 30), seule la diode électroluminescente D₁ peut émettre de la lumière (bloc 31). La sélection du nombre de diodes électroluminescentes globales qui vont effectivement émettre de la lumière parmi les diodes électroluminescentes globales qui peuvent émettre de la lumière est réalisée par le circuit de commutation 16. Selon un mode de réalisation, le circuit de commutation 16 sélectionne le plus grand nombre de diodes électroluminescentes globales qui peuvent émettre de la lumière.

En fonctionnement, lorsque la valeur absolue de la tension V_{IN} est inférieure à la tension V_{CAP} diminuée de la somme des tensions V_{THD0B} et v_{THD0D} (test 24), la tension rectifiée V_{RECT} est imposée par le condensateur Cap et est égale à la tension V_{CAP} diminuée des tensions aux bornes des diodes D_{0B} et D_{0D} (bloc 31). Le courant circule alors en passant successivement par la diode D_{0B}, une ou plusieurs diodes électroluminescentes globales, le circuit 14, la diode D_{0D} et le condensateur Cap. Le nombre de diodes électroluminescentes qui peuvent émettre de la lumière dépend de la valeur de la tension V_{CAP} diminuée de la somme des tensions V_{THD0B} et V_{THD0D}. Si la tension V_{CAP} diminuée de la somme des tensions V_{THD0B} et v_{THD0D} est supérieure à la somme des tensions de seuil V_{TH1} à V_{THN} (test 32), les diodes électroluminescentes D₁ à D_{N} peuvent émettre de la lumière (bloc 33). De façon générale, si la tension V_{CAP} diminuée de la somme des tensions V_{THD0B} et v_{THD0D} est supérieure à la somme des tensions de seuil V_{TH1} à V_{THi} mais inférieure à la somme des tensions de seuil V_{TH1} à V_{THi+1} (test 34), seules les diodes électroluminescentes D₁ à Dᵢ peuvent émettre de la lumière (bloc 35) . En outre, si la tension V_{CAP} diminuée de la somme des tensions V_{THD0B} et V_{THD0D} est seulement supérieure à la tension de seuil V_{TH1} (test 36), seule la diode électroluminescente D₁ peut émettre de la lumière (bloc 37). La sélection du nombre de diodes électroluminescentes globales qui vont effectivement émettre de la lumière parmi les diodes électroluminescentes globales qui peuvent émettre de la lumière est réalisée par le circuit de commutation 16. Selon un mode de réalisation, le circuit de commutation 16 sélectionne le plus grand nombre de diodes électroluminescentes globales qui peuvent émettre de la lumière sachant que la charge du condensateur Cap reste prioritaire.

Le présent mode de réalisation permet de limiter le déphasage entre le courant fourni par la source 11 de la tension alternative V_{IN} et la tension V_{IN}, donc de garder un facteur de puissance important contrairement à un mode de réalisation dans lequel le condensateur Cap serait prévu directement entre les noeuds A₁ et A₂, ce qui déphaserait le courant fourni par la source 11 de la tension alternative V_{IN} et la tension V_{IN}.

Dans le cas où N est supérieur ou égal à 2, le fait que le circuit optoélectronique comprend les diodes électroluminescents globales D₂ à D_{N} en série après la diode électroluminescente globale D₁ permet d'augmenter le rendement lumineux du circuit optoélectronique. En effet, sur le front montant de V_{ABS}, entre le moment où la diode électroluminescente globale D₁ est alimentée par le secteur et le moment pendant lequel le condensateur Cap commence à être chargé, l'énergie électrique serait perdue en l'absence des diodes électroluminescents globales D₂ à D_{N}. De manière similaire, de l'énergie électrique serait perdue sur front descendant de V_{ABS}, entre le moment où la charge du condensateur Cap est terminée et le moment ou le condensateur Cap se décharge dans la diode électroluminescente globale D₁ en l'absence des diodes électroluminescents globales D₂ à D_{N}.

Le fonctionnement du circuit optoélectronique 20 comprend une phase d'initialisation pendant laquelle la tension V_{CAP} augmente au cours de cycles successifs de variation de la tension V_{RECT} jusqu'à se stabiliser à une valeur moyenne pour laquelle la charge et la décharge de la capacité Cap sont équivalentes.

Le principe général de fonctionnement du circuit optoélectronique 20 représenté en figure 3 décrit précédemment va maintenant être décrit dans des modes de réalisation particuliers. Dans les modes de réalisation qui vont être décrits par la suite, on appelle I_{LED} le courant traversant la diode électroluminescente globale D₁ et I_{CAP} le courant traversant la capacité Cap.

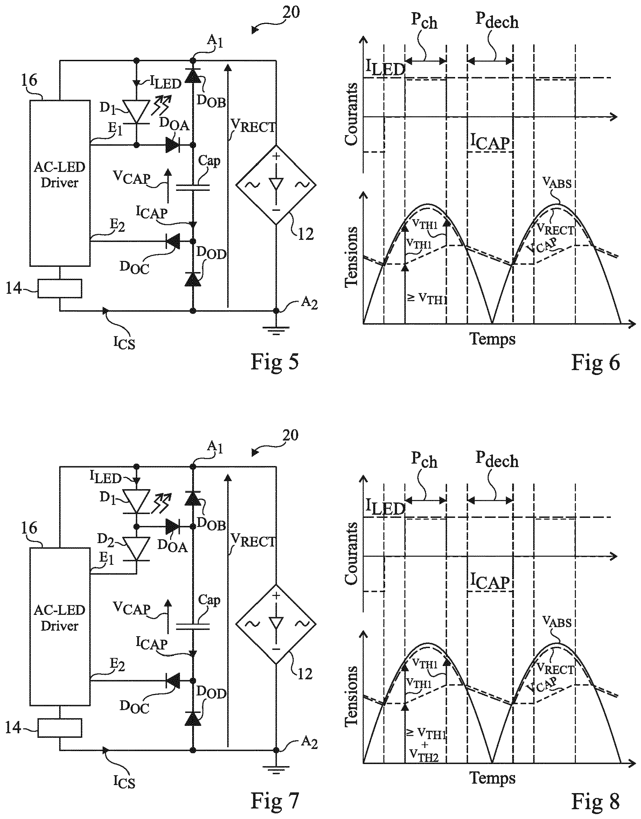

La figure 5 est une figure analogue à la figure 3 dans le cas où N est égal à 1 et la figure 6 est un chronogramme des courants I_{CAP} et I_{LED} et des tensions V_{ABS}, V_{RECT} et V_{CAP} du circuit optoélectronique de la figure 5. En figure 5, les bornes IN₁ et IN₂ et la source 11 ne sont pas représentées. Sur la figure 6, les tensions de seuil des diodes D_{0A}, D_{0B}, D_{0C} et D_{0D} sont négligées. Chaque phase P_{ch} correspond à une phase de charge du condensateur Cap et chaque phase P_{dech} correspond à une phase de décharge du condensateur Cap.

Les figures 7 et 8 sont des figures analogues respectivement aux figures 5 et 6 dans le cas où le nombre N de diodes électroluminescentes globales est égal à 2 et dans le cas où seule la cathode de la diode électroluminescente globale D₂ est connectée au circuit de commutation 16.

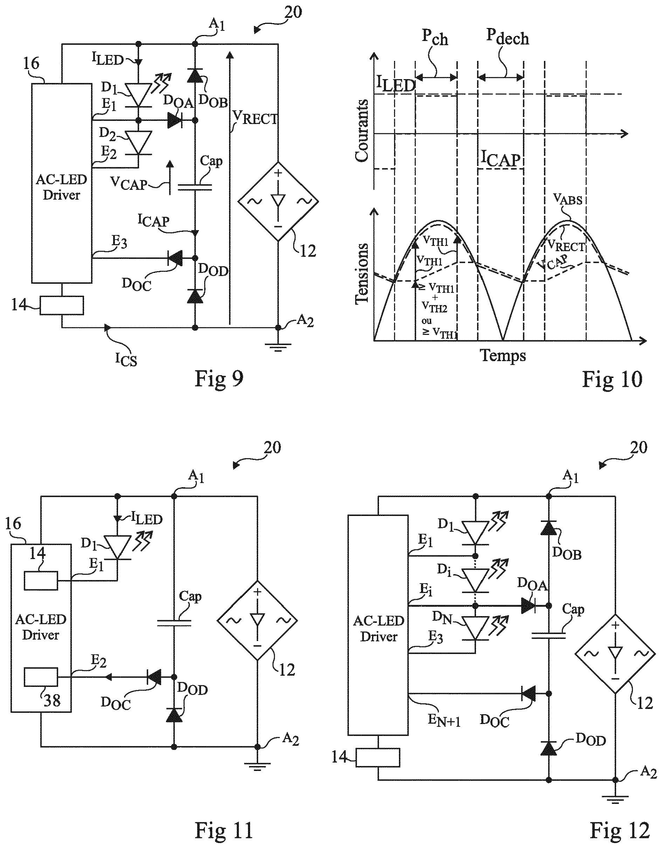

Les figures 9 et 10 sont des figures analogues respectivement aux figures 5 et 6 dans le cas où le nombre N de diodes électroluminescentes globales est égal à 2 et dans le cas où les cathodes des diodes électroluminescentes globales D₁ et D₂ sont connectées au circuit de commutation 16.

Le fait que la diode D_{0A} soit connectée à la cathode de la diode électroluminescente globale D₁ et que la diode D_{0C} soit connecté au noeud E_{N+1} permet d'appliquer au condensateur Cap une tension de charge maximale la plus proche possible de V_{RECT} diminuée seulement de la tension de seuil de la diode électroluminescente globale D₁ et des tensions de seuil des diodes D_{0A} et D_{0C} et dépendante du courant imposé par le circuit 14 de régulation/limitation du courant.

Selon un autre mode de réalisation, les courants de charge et décharge du condensateur Cap sont différents, afin de modifier les temps de charge et décharge du condensateur Cap et ainsi d'optimiser le rendement électrique et/ou les performances en clignotement du circuit optoélectronique 20.

La figure 11 est une figure analogue à la figure 5 à la différence que les diodes D_{0A} et D_{0B} ne sont pas présentes, que le circuit de commutation 16 comprend la source de courant 14 qui est reliée à la diode électroluminescente globale D₁ et que le circuit de commutation 16 comprend, en outre, une source de courant supplémentaire 38 connectée à la cathode de la diode D_{0C}. Ce mode de réalisation permet de façon avantageuse que le courant de charge du condensateur Cap soir différent du courant de décharge du condensateur Cap.

La figure 12 est une figure analogue à la figure 3 à la différence que l'anode de la diode D_{0A} est connectée à la cathode de la diode électroluminescente globale Dᵢ. Ceci peut être avantageux dans le cas où la tension V_{RECT} ne correspond pas à une tension sinusoïdale redressée mais correspond, par exemple, à la tension fournie par un gradateur, notamment un gradateur à fermeture temporisée et un gradateur à ouverture temporisée. Dans ce cas, la tension aux bornes de la capacité Cap est moins importante. La capacité Cap est susceptible de ne plus pouvoir se décharger dans le premier groupe de diodes électroluminescentes. Subdiviser ce premier groupe en plusieurs avec des tensions de seuil moins importantes permet au dispositif de rester allumé même pour une valeur V_{CAP} faible.

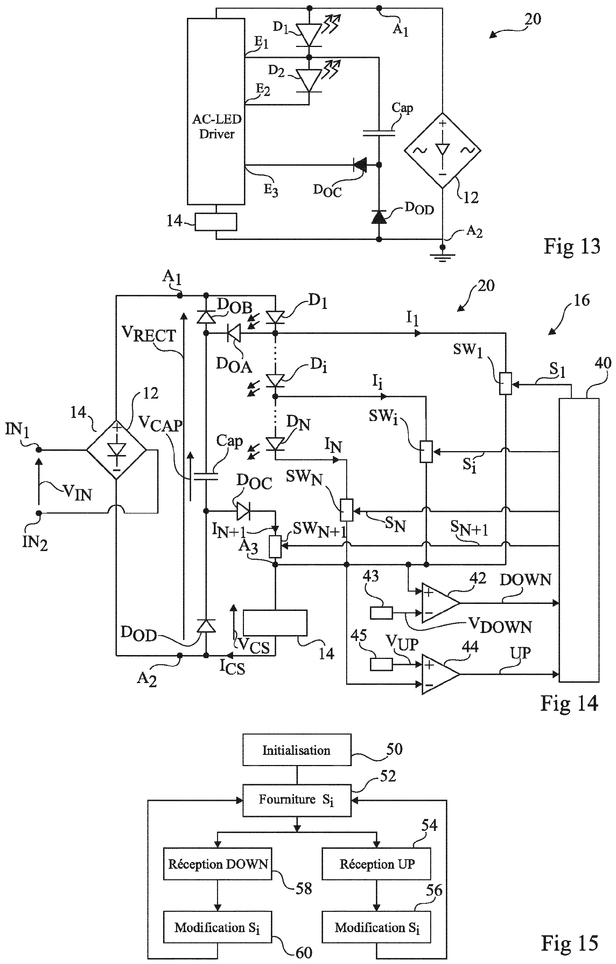

La figure 13 est une figure analogue à la figure 9 à la différence que les diodes D_{0A} et diode D_{0B} ne sont pas présentes et que l'électrode du condensateur Cap qui, en figure 9, est connectée à la cathode de la diode D_{0A} et à l'anode de la diode D0B, est en figure 13 connectée à la cathode de la diode électroluminescente globale D₁. Ce mode de réalisation permet de façon avantageuse de s'affranchir de deux diodes par rapport au mode de réalisation représentée en figure 1.

La figure 14 représente un mode de réalisation plus détaillé de certains éléments du circuit optoélectronique 20 représenté en figure 3 et qui est décrit dans la demande de brevet français FR 15/59617 non encore publiée.

Dans ce mode de réalisation, le circuit de commutation 16 comprend N+1 circuits de conduction SW₁ à SW_{N+1}. Chaque circuit de conduction SWᵢ, i variant de 1 à N, est monté entre le noeud A₃ et la cathode de la diode électroluminescente globale Dᵢ. Le circuit de conduction SW_{N+1} est monté entre le noeud A₃ et la cathode de la diode D_{0C}.

Chaque circuit SWᵢ, i variant de 1 à N+1, est commandé par un signal Sᵢ fourni par un module de commande 40. Pour i variant de 1 à N+1, on appelle Iᵢ le courant circulant dans le circuit SWᵢ. A titre de variante, le circuit SW_{N+1}, qui protège la source de courant 30 des surtensions, peut ne pas être commandé par le module de commande et être toujours passant ou peut ne pas être présent et la cathode de la diode D_{0C} peut être connectée directement au noeud A₃. Le module de commande 16 peut, en totalité ou en partie, être réalisé par un circuit dédié ou peut comprendre un microprocesseur ou un microcontrôleur adapté à exécuter une suite d'instructions stockées dans une mémoire.

Selon un mode de réalisation, chaque circuit SWᵢ peut fonctionner dans K états de conduction différents, où K est un entier supérieur ou égal à 2. Un état de conduction est un état dans lequel le circuit ne laisse pas passer le courant ou laisse passer le courant avec une résistance qui peut être différente selon l'état considéré. Parmi les K états de conduction du circuit SWᵢ, il y a un état dans lequel le circuit SWᵢ est le moins conducteur électriquement, par exemple un état dans lequel le circuit SWᵢ empêche le passage du courant et un état dans lequel le circuit SWᵢ est le plus conducteur électriquement. Lorsque K est égal à 2, le circuit SWᵢ est, par exemple, un interrupteur qui est soit ouvert soit fermé. Le signal Sᵢ peut alors être un signal binaire et l'interrupteur SWᵢ est ouvert lorsque le signal Sᵢ est à un premier niveau, par exemple S_{i,1} ou "0", et l'interrupteur SWᵢ est fermé lorsque le signal Sᵢ est à un deuxième niveau, par exemple S_{i,2} ou "1". A titre d'exemple, lorsque K est supérieur ou égal à 3, le circuit SWᵢ peut fonctionner dans un état dans lequel il empêche le passage du courant et dans au moins deux états dans lesquels le circuit SWᵢ permet le passage du courant avec des résistances différentes selon le signal Sᵢ. Le signal Sᵢ peut alors être un signal pouvant prendre plusieurs valeurs discrètes S_{i,1} à S_{i,K}, chaque valeur du signal Sᵢ commandant l'un des états de l'interrupteur SWᵢ. A titre d'exemple, l'état du circuit SWᵢ associé au signal S_{i,1} correspond à l'état bloqué dans lequel le circuit SWᵢ empêche la circulation de courant et les états du circuit SWᵢ associés respectivement aux signaux S_{i,2} à S_{i,K} correspondent aux états dans lesquels le circuit SWᵢ a une résistance de plus en plus faible. A titre de variante, différentes valeurs du signal Sᵢ peuvent commander un même état de conduction du circuit SWᵢ.

Le circuit optoélectronique 20 comprend un premier comparateur 42, par exemple un amplificateur opérationnel monté en comparateur, fournissant un signal DOWN au module de commande 40, dont l'entrée non inverseuse (+) est reliée au noeud A₃ et dont l'entrée inverseuse (-) reçoit un seuil de tension V_{DOWN} fourni par un circuit 43. Selon un mode de réalisation, le comparateur 42 fournit le signal DOWN à deux états. Le signal DOWN est mis au premier état, par exemple "0", lorsque la tension V_{CS} est inférieure au seuil de tension V_{DOWN}. Le signal DOWN est mis au second état, par exemple "1", lorsque la tension V_{CS} est supérieure au seuil de tension V_{DOWN}.

Le circuit optoélectronique 20 comprend un deuxième comparateur 44, par exemple un amplificateur opérationnel monté en comparateur, fournissant un signal UP au module de commande 40, dont l'entrée inverseuse (-) est reliée au noeud A₃ et dont l'entrée non inverseuse (+) reçoit un seuil de tension V_{UP} fourni par un circuit 45. Selon un mode de réalisation, le comparateur 44 fournit le signal UP à deux états. Le signal UP est mis au premier état, par exemple "0", lorsque la tension V_{CS} est supérieure au seuil de tension V_{UP}. Le signal UP est mis au second état, par exemple "1", lorsque la tension V_{CS} est inférieure au seuil de tension V_{UP}, la tension V_{UP} étant inférieure à la tension v_{DOWN}.

Selon un mode de réalisation, chaque circuit SWᵢ est, par exemple, à base d'au moins un transistor, notamment un transistor à effet de champ à grille métal-oxyde ou transistor MOS, à enrichissement ou à appauvrissement.

Selon un mode de réalisation, chaque circuit de conduction SWᵢ correspond à un transistor MOS, par exemple à canal N, dont le drain est relié à la cathode de la diode électroluminescente globale Dᵢ pour les circuits de conduction SW₁ à SW_{N} et à la cathode de la diode D_{0C} pour le circuit de conduction SW_{N+1}, dont la source est reliée au noeud A₃ et dont la grille reçoit le signal Sᵢ. Lorsque le signal Sᵢ est binaire, il peut prendre deux valeurs S_{i,1} (ou "0") et S_{i,2} (ou "1"). Le transistor SWᵢ peut fonctionner selon deux états, un état passant et un état bloqué, l'état passant étant par exemple obtenu pour la valeur "1", et l'état bloqué étant par exemple obtenu pour la valeur "0". Lorsque le signal Sᵢ peut prendre plus de deux valeurs, le transistor SWᵢ peut fonctionner selon plus de deux états dont un état bloqué et au moins deux états de conduction différents. Selon un autre mode de réalisation, le circuit de conduction SWᵢ comprend deux transistors MOS, par exemple à canal N entre la cathode de la diode électroluminescente globale Dᵢ (ou de la diode D_{0C}) et le noeud A₃, le transistor connecté à la diode électroluminescente globale Dᵢ (ou de la diode D_{0C}) étant un transistor haute tension monté en cascode et le transistor connecté au noeud A₃ étant un transistor basse tension commandé par le signal Sᵢ. Ceci permet avantageusement d'augmenter la vitesse de commutation du circuit de conduction SWᵢ.

La figure 15 représente, sous la forme d'un diagramme de fonctionnement, un mode de réalisation d'un procédé de commande des circuits de conduction SWᵢ par le module de commande 40. Le procédé débute à l'étape 50.

L'étape 50 correspond à une étape d'initialisation, par exemple au démarrage du circuit optoélectronique 20, c'est-à-dire à la mise sous tension du circuit optoélectronique 20. A titre d'exemple, à l'étape 50, le module de commande 40 fournit les signaux Sᵢ à l'état S_{i,1}, c'est-à-dire que tous les circuits de conduction SWᵢ sont dans l'état où leur résistance est la plus forte. Lorsque les circuits de conduction SWᵢ sont des interrupteurs, tous les interrupteurs SWᵢ sont ouverts à l'étape 50. Le procédé se poursuit à l'étape 52.

A l'étape 52, le module de commande 40 maintient la fourniture des signaux Sᵢ à la dernière valeur déterminée tant que le module de commande 40 reçoit les signaux DOWN et UP à "0". A l'étape d'initialisation, aucun courant ne circulant dans les diodes électroluminescentes globales D₁ à D_{N}, la tension V_{CS} est naturellement tirée vers 0 V, et est donc inférieure à la tension V_{UP}, de sorte que le signal UP passe à "1".

A l'étape 54, le module de commande 40 reçoit un signal UP à "1". Ceci signifie que la tension V_{CS} a diminué au-dessous de V_{UP}. Le procédé se poursuit à l'étape 56.

A l'étape 56, le module de commande 40 modifie les valeurs des signaux Sᵢ de façon à faire augmenter la tension V_{CS}. Selon un mode de réalisation, lorsque chaque circuit de conduction SWᵢ correspond à un interrupteur, que les interrupteurs SW₁ à SWᵢ₋₁ sont ouverts et que les interrupteurs SWᵢ à SW_{N+1} sont fermés, une augmentation de la tension V_{CS} peut être obtenue en fermant l'interrupteur SWᵢ₋₁. Selon un autre mode de réalisation, lorsque chaque circuit de conduction SWᵢ est à plusieurs états de conduction, que les circuits de conduction SW₁ à SWᵢ-₁ sont à l'état non passant, que les circuits de conduction SWᵢ₊₁ à SW_{N+1} sont à l'état de conduction le plus passant et que le circuit de conduction SWᵢ est dans l'un des états passants, une augmentation de la tension V_{CS} peut être obtenue, dans le cas où l'état de conduction du circuit SWᵢ n'est pas l'état le plus passant, en modifiant l'état de conduction du circuit de conduction SWᵢ pour en augmenter la conduction, ou, si l'état de conduction du circuit SWᵢ est l'état le plus passant, en modifiant l'état du circuit SWᵢ₋₁ pour le mettre dans son état de conduction le moins passant.

A l'étape 58, le module de commande 40 reçoit un signal DOWN à "1". Ceci signifie que la tension V_{CS} a augmenté au-dessus de V_{DOWN}. Le procédé se poursuit à l'étape 60.

A l'étape 60, le module de commande 40 modifie les valeurs des signaux Sᵢ de façon à faire diminuer la tension V_{CS}. Selon un mode de réalisation, lorsque chaque circuit de conduction SWᵢ correspond à un interrupteur, que les interrupteurs SW₁ à SWᵢ₋₁ sont ouverts et que les interrupteurs SWᵢ à SW_{N+1} sont fermés, une diminution de la tension V_{CS} peut être obtenue en ouvrant l'interrupteur SWᵢ. Selon un autre mode de réalisation, lorsque chaque circuit de conduction SWᵢ est à plus de deux états de conduction, que les circuits de conduction SW₁ à SWᵢ₋₁ sont à l'état non passant, que les circuits de conduction SWᵢ₊₁ à SW_{N+1} sont à l'état de conduction le plus passant et que le circuit de conduction SWᵢ est dans l'un des états passants, une diminution de la tension V_{CS} peut être obtenue en modifiant l'état de conduction du circuit de conduction SWᵢ pour en diminuer la conduction. Si le circuit de conduction SWᵢ est dans l'état non passant, l'état du circuit de conduction SWᵢ₊₁ est modifié pour rendre ce dernier moins passant. Le procédé continue alors à l'étape 52.

On obtient ainsi une régulation de la tension V_{CS} qui reste comprise entre les seuils de tension V_{UP} et V_{DOWN} quelles que soient les variations de V_{RECT}.

Un mode de réalisation du procédé de commande du circuit optoélectronique 20 va maintenant être décrit dans le cas où les circuits de conduction SWᵢ correspondent à des interrupteurs. Au début d'une phase ascendante de la tension V_{RECT}, c'est-à-dire, dans le cas où la tension V_{RECT} est obtenue à partir d'une tension V_{IN} sinusoïdale, lorsque V_{RECT} croît depuis 0 V, les interrupteurs SWᵢ, i variant de 1 à N, sont fermés, c'est-à-dire passants électriquement.

Dans une phase ascendante de la tension d'alimentation V_{RECT}, pour i variant de 1 à N, alors que les diodes électroluminescentes globales D₁ à Dᵢ₋₁ sont passantes et que les diodes électroluminescentes globales Dᵢ à D_{N} sont bloquées, lorsque la tension aux bornes de la diode électroluminescente globale Dᵢ devient supérieure à la tension de seuil de la diode électroluminescente globale Dᵢ, celle-ci devient passante et un courant commence à circuler dans la diode électroluminescente globale Dᵢ. Ceci entraîne une augmentation de la tension V_{CS}. Si cette dernière passe au-delà du seuil de tension V_{DOWN}, le module 40 commande alors l'ouverture de l'interrupteur d'indice le plus faible parmi les interrupteurs fermés.

Au début d'une phase descendante de la tension d'alimentation V_{RECT}, c'est-à-dire, dans le cas où la tension V_{RECT} est obtenue à partir d'une tension V_{IN} sinusoïdale, lorsque V_{RECT} décroît depuis une valeur positive maximale, supérieure à la somme des tensions de seuil des diodes électroluminescentes D₁ à D_{N}, les interrupteurs SWᵢ, i variant de 1 à N, sont ouverts. Dans une phase descendante, les diodes électroluminescentes globales D₁ à Dᵢ étant passantes et les diodes électroluminescentes globales Dᵢ₊₁ à D_{N} étant bloquées, lorsque la tension V_{CS} diminue en dessous de la tension V_{UP}, cela signifie que la tension aux bornes de la source de courant 30 risque de devenir trop faible pour que celle-ci puisse fonctionner correctement et délivrer son courant nominal. Cela signifie donc qu'il faut réduire le nombre i de diodes en conduction pour augmenter la tension aux bornes de la source de courant 30. Le module 40 commande alors la fermeture de l'interrupteur d'indice le plus fort parmi les interrupteurs ouverts. Dans le cas où chaque interrupteur SWᵢ est réalisé par un transistor MOS à canal N dont le drain est relié à la cathode de la diode électroluminescente globale Dᵢ et dont la source est relié au noeud A₃, lorsque la tension d'alimentation V_{RECT} baisse, la tension entre le drain de l'interrupteur SWᵢ et le noeud A₃ diminue jusqu'à ce que le fonctionnement du transistor SWᵢ passe du régime de saturation au régime linéaire. Ceci entraîne une augmentation de la tension entre la grille et la source du transistor SWᵢ et donc une diminution de la tension V_{CS}.

De façon avantageuse, le mode de réalisation du procédé de commande des interrupteurs SWᵢ décrit précédemment ne dépend pas du nombre de diodes électroluminescentes élémentaires qui composent chaque diode électroluminescente globale Dᵢ et donc ne dépend pas de la tension de seuil de chaque diode électroluminescente globale.

Un mode de réalisation du procédé de commande du circuit optoélectronique va maintenant être décrit dans le cas où chaque circuit de conduction SWᵢ a un nombre d'états de conduction supérieur ou égal à 3. Au début d'une phase ascendante de la tension V_{RECT}, c'est-à-dire, dans le cas où la tension V_{RECT} est obtenue à partir d'une tension V_{IN} sinusoïdale, lorsque V_{RECT} croît depuis 0 V, les circuits de conduction SWᵢ, i variant de 1 à N+1, sont dans l'état de conduction le plus passant. Dans une phase ascendante de la tension d'alimentation V_{RECT}, pour i variant de 1 à N, alors que les diodes électroluminescentes globales D₁ à Dᵢ₋₁ sont passantes et que les diodes électroluminescentes globales Dᵢ à D_{N} sont bloquées, lorsque la tension aux bornes de la diode électroluminescente globale Dᵢ devient supérieure à la tension de seuil de la diode électroluminescente globale Dᵢ, celle-ci devient passante et un courant commence à circuler dans la diode électroluminescente globale Dᵢ. Ceci entraîne une augmentation de la tension V_{CS}. Si cette dernière passe au-delà du seuil de tension V_{DOWN}, le module 40 commande alors le passage du circuit de conduction d'indice le plus faible parmi les circuits de conduction passants vers un état de moins en moins passant à chaque fois que la tension V_{CS} augmente au-delà de la tension V_{DOWN} et ce jusqu'à atteindre l'état non passant.

Au début d'une phase descendante de la tension d'alimentation V_{RECT}, c'est-à-dire, dans le cas où la tension V_{RECT} est obtenue à partir d'une tension V_{IN} sinusoïdale, lorsque V_{RECT} décroît depuis une valeur positive maximale, supérieure à la somme des tensions de seuil des diodes électroluminescentes D₁ à D_{N}, les circuits de conduction SWᵢ, i variant de 1 à N-1, sont dans l'état non passant. Dans une phase descendante, les diodes électroluminescentes globales D₁ à Dᵢ₋₁ étant passantes et les diodes électroluminescentes globales Dᵢ à D_{N} étant bloquées, lorsque la tension V_{CS} diminue en dessous du seuil de tension V_{UP}, le module 40 commande alors le passage du circuit de conduction d'indice le plus fort parmi les circuits de conduction qui ne sont pas dans l'état le plus passant à un état de plus en plus passant à chaque fois que la tension V_{CS} diminue en dessous du seuil de tension V_{UP} et ce jusqu'à atteindre l'état de conduction le plus passant.

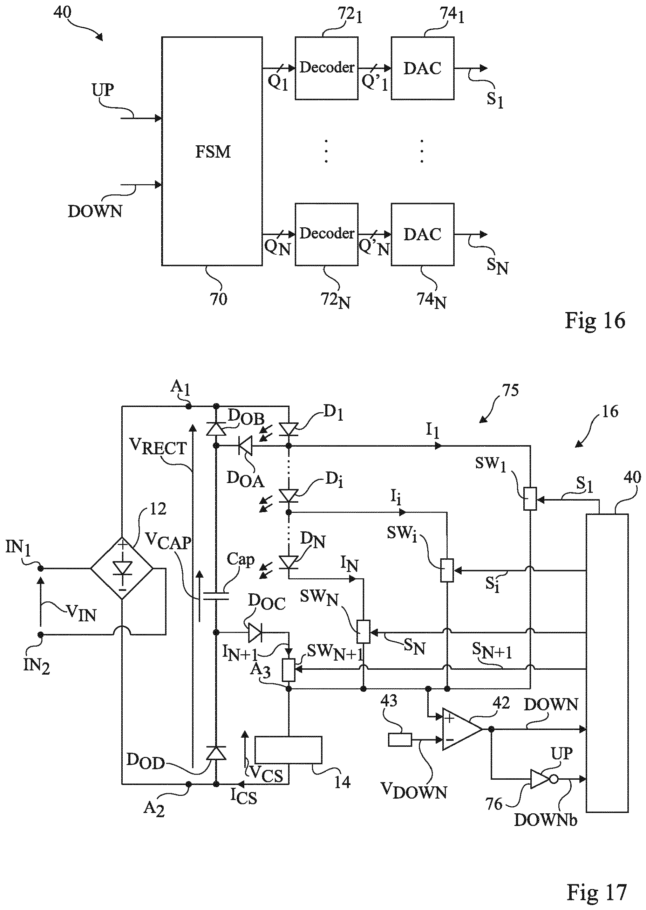

La figure 16 représente un mode de réalisation plus détaillé du module de commande 40 dans le cas où le nombre d'états K de conduction de chaque circuit de conduction SWᵢ est supérieur ou égal à 3. Dans le présent mode de réalisation, le module de commande 40 comprend une machine à nombre fini d'états 70 (FSM), également appelé automate fini, à K*(N+1) états recevant les signaux DOWN et UP et fournissant un signal numérique Qᵢ pour chaque circuit de conduction SWᵢ. A titre d'exemple, l'automate fini 70 peut fonctionner sur des fronts de UP et DOWN. Chaque valeur du signal numérique Qᵢ code l'un des K états du circuit de conduction SWᵢ. Le module de commande 40 comprend, en outre, un décodeur 72ᵢ (Decoder) pour chaque circuit de conduction SWᵢ, i variant de 1 à (N+1), chaque décodeur 72ᵢ recevant le signal numérique Qᵢ et fournissant un signal numérique Q'ᵢ. Le module de commande 40 comprend, en outre, un convertisseur numérique/analogique 74ᵢ (DAC) pour chaque circuit de conduction SWᵢ, i variant de 1 à N+1, par exemple du type à modulation de largeur d'impulsion ou un réseau qui subdivise une tension en plusieurs tensions intermédiaires, chaque convertisseur numérique/analogique 74ᵢ recevant le signal numérique Q'ᵢ et fournissant le signal Sᵢ. Le décodeur 72ᵢ permet de fournir un signal numérique Q'ᵢ adapté au fonctionnement du convertisseur 74ᵢ numérique/analogique associé. Le nombre de bits des signaux numériques Qᵢ et Q'ᵢ dépend du type de codage utilisé et de la précision du convertisseur numérique/analogique 74ᵢ.

Dans le cas où le nombre d'états de conduction K est égal à 2, le mode de réalisation du module de commande 40 représenté en figure 16 peut être simplifié, le module de commande 40 pouvant ne pas comprendre les décodeurs 72ᵢ et le convertisseur numérique/analogique 74ᵢ pouvant être remplacé par un circuit d'ajustement de niveau.

Selon un mode de réalisation, l'automate fini 70 utilise un compteur COMPT comprenant (N+1)*(K-1) bits et égal à la concaténation des signaux Q₁ à Q_{N+1} et chaque signal numérique Qᵢ comprend (K-1) bits. A l'initialisation du circuit optoélectronique, tous les bits du compteur sont mis à "0". En fonctionnement, l'automate fini 70 incrémente le compteur COMPT à la réception d'un signal UP à "1" ; si tous les bits sont mis à "1", le compteur reste dans son état. L'automate fini 70 décrémente le compteur COMPT à la réception d'un signal DOWN à "1" ; si tous les bits sont mis à "0", le compteur reste dans son état.

De façon avantageuse, les tensions maximales appliquées aux composants électroniques, notamment les transistors MOS, des comparateurs 42, 40 restent faibles par rapport à la valeur maximale que peut prendre la tension V_{RECT}. Il n'est alors pas nécessaire de prévoir, pour les comparateurs 42, 40, des composants électroniques pouvant supporter la valeur maximale que peut prendre la tension V_{RECT}.

Selon un autre mode de réalisation, dès que la tension au drain de l'interrupteur SW_{N} devient insuffisante pour faire passer le courant maximal dans la diode électroluminescente globale D_{N}, l'interrupteur SW_{N} est dans son état le plus passant, le noeud A₃ a le même potentiel que le noeud A₂ et aucun courant ne passe. Une détection de cet état le plus passant de l'interrupteur SW_{N} permet de réaliser une rétroaction filtrée (par exemple de type passe-bas) sur la valeur du courant circulant dans la diode électroluminescente globale D_{N} jusqu'à ce que l'interrupteur SW_{N} ne soit plus dans son état le plus passant pendant une période entière de la tension V_{RECT} et donc que le noeud A₃ ne soit plus au potentiel A₂ et que la source de courant 14 fonctionne. Le courant dans les diodes électroluminescentes globales va atteindre la valeur pour laquelle les diodes électroluminescentes globales seront constamment allumées tout au long d'un période de V_{RECT}. On a donc une régulation du courant dans les diodes électroluminescentes globales en fonction de la tension V_{RECT}.

La figure 17 représente un schéma électrique d'un autre mode de réalisation d'un circuit optoélectronique 75 comprenant l'ensemble des éléments du circuit optoélectronique 20 à l'exception du comparateur 44 et du circuit 45 de fourniture du seuil de tension V_{UP} qui ne sont pas présents. Le circuit optoélectronique 75 comprend, en outre, un inverseur 76 recevant le signal DOWN et fournissant au module de commande 40 le signal DOWNb qui est le complémentaire du signal DOWN. Le signal DOWNb est équivalent au signal UP décrit précédemment pour le circuit optoélectronique 20 et peut être fourni à l'entrée du module de commande 40 qui, pour le circuit optoélectronique 20, reçoit le signal UP. Le module de commande 40 peut avoir la structure décrite précédemment en relation avec la figure 16. En particulier, le module de commande 40 peut comprendre un automate fini 70 fonctionnant comme cela a été décrit précédemment en relation avec la figure 16. A titre de variante, le comparateur 42 peut être un comparateur à hystérésis. Selon un autre mode de réalisation, le comparateur 42 du circuit optoélectronique 75 est remplacé par une bascule de Schmitt, ayant deux tensions de seuil intrinsèques V_{L} et V_{H}, recevant la tension V_{CS} et fournissant le signal DOWN. A titre d'exemple, quand la tension V_{CS} augmente depuis 0 V, le signal DOWN reste à l'état "0" jusqu'à ce que la tension V_{CS} dépasse le seuil de tension V_{H}. A ce moment, le signal DOWN passe à l'état "1". Le signal DOWN reste à l'état "1" jusqu'au moment où la tension V_{CS} devient inférieure au seuil de tension V_{L}. A ce moment, le signal DOWN passe à l'état "0". Le signal DOWN reste à l'état "0" jusqu'à ce que la tension V_{CS} repasse au-dessus du seuil de tension V_{H}.

Pour modifier la puissance lumineuse fournie par le circuit d'éclairage, il est connu de placer un gradateur entre la source de la tension redressée et le circuit optoélectronique. Il existe plusieurs types de gradateurs, dont notamment les gradateurs à fermeture temporisée et les gradateurs à ouverture temporisée.

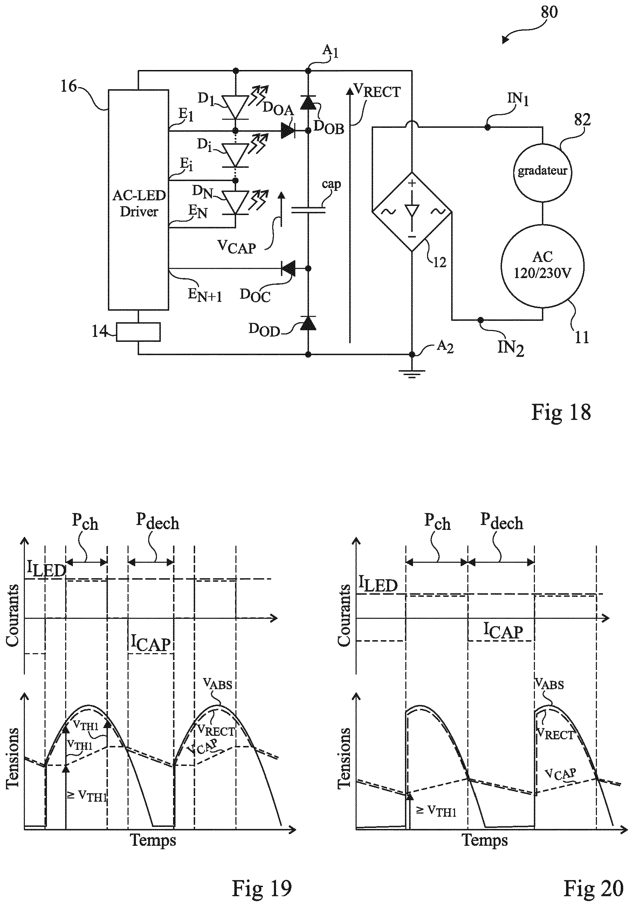

La figure 18 est une vue analogue à la figure 3 d'un mode de réalisation d'un circuit optoélectronique 80 dans lequel un gradateur 82 est disposé en série avec la source 11 entre les bornes IN₁ et IN₂. Le gradateur 82 peut être un gradateur à coupure de phase comprenant un interrupteur électronique dont le temps de conduction est limité à une fraction de la période T de la tension V_{IN}.

Un inconvénient est que les gradateurs ont généralement été conçus pour fonctionner avec des circuits d'éclairage à lampe à incandescence et peuvent ne pas fonctionner correctement lorsqu'ils sont connectés à un circuit optoélectronique à diodes électroluminescentes, car leur puissance est souvent trop faible par rapport à la puissance minimale requise par le gradateur.

Les figures 19 et 20 représentent chacune un exemple de courbes d'évolution des courants I_{LED} et I_{CAP} et des tensions V_{ABS}, V_{RECT} et V_{CAP} lorsque la tension alternative V_{IN} est sinusoïdale de période T et lorsque le gradateur 82 est un gradateur à fermeture temporisée (en anglais leading edge dimmer). La tension V_{ABS} suit le signal qui serait obtenu en l'absence de gradateur à l'exception d'une durée T' au début de chaque arc de sinusoïde pendant laquelle la tension V_{ABS} est sensiblement nulle. Pour un gradateur à ouverture temporisée (en anglais trailing edge dimmer), la tension V_{ABS} suit le signal qui serait obtenu en l'absence de gradateur à l'exception d'une durée en fin de chaque arc de sinusoïde pendant laquelle la tension V_{ABS} est sensiblement nulle. Le rapport entre la durée T' et la demi-période T du signal sinusoïdal non redressé est appelé angle d'ouverture du gradateur.

Pour être sûr qu'il n'y ait pas d'extinction de la diode électroluminescente globale D₁, il faut que la charge du condensateur Cap soit toujours supérieure à la tension de seuil V_{TH1}. Si la tension est hachée par le gradateur 82, le condensateur Cap a moins de temps pour se recharger alors que le temps de décharge dans la diode électroluminescente globale D₁ est allongé.

La figure 19 représente une configuration dans laquelle le courant circulant dans la diode électroluminescente D₁ n'est pas modifié par la présence du gradateur 82 tandis que la figure 20 représente une configuration avec un angle d'ouverture plus important dans laquelle le courant circulant dans la diode électroluminescente D₁ diminue en raison de la présence du gradateur 82.

Il y a deux points à prendre en compte pour permettre l'utilisation d'un gradateur 82 tout en maintenant un niveau de clignotement/scintillement tolérable :
premièrement, il faut assurer un niveau de variation de luminosité au cours d'une période de V_{RECT} tolérable ; et
deuxièmement, il faut assurer le fonctionnement du gradateur 82 en imposant une impédance à ses bornes similaire à celle pour laquelle il a été conçu, c'est-à-dire une impédance en générale faible.

Pour le premier point, pour être sûr qu'il n'y ait pas d'extinction de la diode électroluminescente globale D₁, il faut que la charge du condensateur Cap soit toujours supérieure à la tension de seuil V_{TH1}. Or si la tension V_{IN} du secteur est hachée par le gradateur 82, le condensateur Cap a moins de temps pour se recharger alors que le temps de décharge dans la diode électroluminescente globale D₁ est allongé. Pour maintenir un niveau de charge acceptable et éviter la variation de luminosité par extinction de la diode électroluminescente globale D₁, un mode de réalisation prévoit de moduler, notamment diminuer, les courants de charge et décharge dans le condensateur Cap afin que la tension moyenne aux bornes du condensateur Cap soit toujours suffisante pour maintenir au moins la diode électroluminescente globale D₁ allumée et ainsi limiter les variations de luminosité au cours d'une période de V_{RECT}.

Pour le deuxième point, le problème se pose lorsque la tension V_{RECT} est inférieure à la tension V_{CAP}, car le courant dans les diodes électroluminescentes est tiré sur le condensateur Cap et non sur la source 11. Un mode de réalisation prévoit d'ajouter un dispositif permettant de détecter si le courant est tiré sur le secteur et de compenser son absence ou sa trop faible valeur par un courant additionnel.

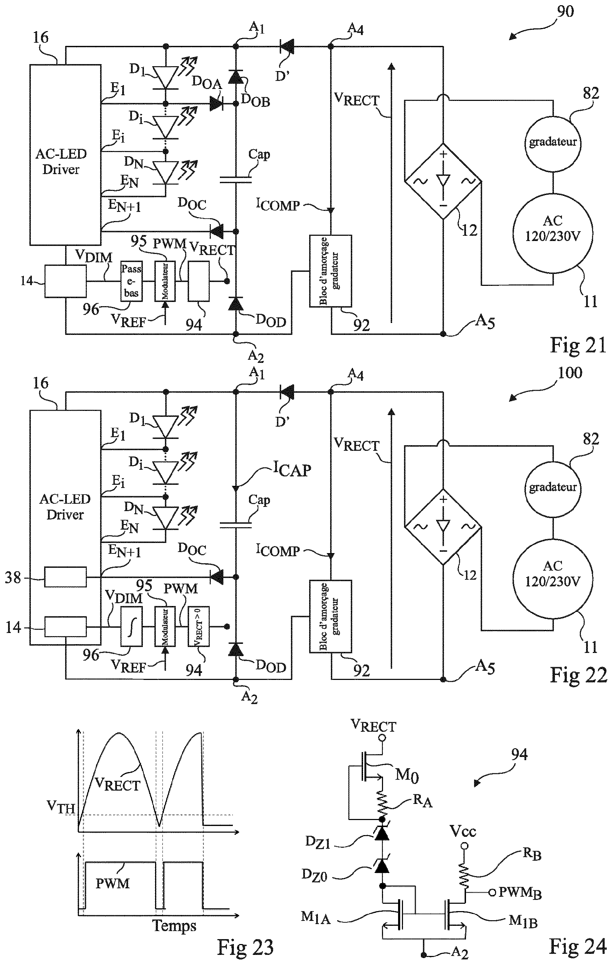

Les figures 21 et 22 représentent des modes de réalisation de circuits optoélectroniques 90 et 100 adaptés à l'utilisation d'un gradateur 82. Le circuit optoélectronique 90 comprend l'ensemble des éléments du circuit optoélectronique 20 représenté en figure 3 tandis que le circuit optoélectronique 100 comprend l'ensemble des éléments du circuit optoélectronique 20 représenté en figure 11. Chaque circuit 90 et 100 comprend, en outre, une diode D' dont la cathode est connectée au noeud A₁ et dont l'anode est connectée à un noeud A₄, connecté à une borne de sortie du pont redresseur 12. On appelle A₅ un noeud connecté à l'autre borne de sortie du pont redresseur 12. Chaque circuit optoélectronique 90 et 100 comprend, en outre, un module 92 (Bloc d'amorçage gradateur) permettant d'amorcer le fonctionnement du gradateur 82. Le module 92 est monté en parallèle du pont redresseur 12, entre le noeud A₄ et le noeud A₅. Le potentiel au noeud A₅ peut correspondre au potentiel de référence bas du pont redresseur 12. Le module 92 est, en outre, relié à l'anode de la diode D_{0D}·

Dans le présent mode de réalisation, la source de courant 14 est une source de courant commandable par un signal V_{DIM}. A titre d'exemple, l'intensité du courant fourni par la source de courant 14 est proportionnelle au signal V_{DIM}. Selon un mode de réalisation, le signal V_{DIM} est une tension qui est obtenue à partie de la tension V_{RECT}, mesurée entre les noeuds A₄ et A₅. Selon un mode de réalisation, chaque circuit 90 et 100 comprend un module 94 de détection de seuil qui reçoit la tension V_{RECT} et qui est adapté à fournir un signal binaire PWM modulé en largeur d'impulsion dont la fréquence correspond à la fréquence du signal V_{RECT} et dont le rapport cyclique est déterminé en comparant la tension V_{RECT} à au moins un seuil. Le circuit 90 comprend, en outre, un modulateur 95 avec une tension de référence V_{REF} recevant le signal PWM et fournissant un signal modulé PWM' un filtre 96 recevant le signal modulé PWM' et fournissant le signal V_{DIM} filtré. Le modulateur 95 permet d'adapter la valeur moyenne du signal V_{DIM} en fonction de la tension V_{REF} et du rapport cyclique du signal PWM.

La figure 23 représente un chronogramme de la tension V_{RECT} et de la tension PWM dans le cas où le module 94 compare la tension V_{RECT} à un seuil unique V_{TH}. Le signal PWM est à '1' lorsque la tension V_{RECT} est supérieure ou égale au seuil V_{TH} et le signal PWM est à '0' lorsque la tension V_{RECT} est inférieure strictement au seuil V_{TH}.

La figure 24 représente un mode de réalisation du module 94 permettant d'obtenir le chronogramme représenté en figure 23. Le module 94 comprend un transistor MOS M0 à canal N dont le drain reçoit la tension V_{RECT}, dont la source est reliée à une borne d'une résistance R_{A} et dont la grille est reliée à l'autre borne de la résistance R_{A}. Deux diodes Zener D_{Z0} et D_{Z1} sont montées en série entre la résistance R_{A} et un miroir de courant, les cathodes des diodes D_{Z0} et D_{Z1} étant orientées du côté de la résistance R_{A}. Le miroir de courant comprend deux transistors MOS M_{1A} et M_{1B} à canal N. Le transistor M_{1A} est monté en diode. Les sources des transistors M_{1A} et M_{1B} sont reliées au noeud A₂. Le drain du transistor M_{1A} est relié aux grilles des transistors M_{1A} et M_{1B} et à l'anode de la diode Zener D_{Z0}. Le drain du transistor M_{1B} fournit le signal PWM_{B}, qui est le complémentaire du signal PWM, et est relié à une source d'un potentiel de référence haut VCC par une résistance R_{A}. Le potentiel de référence haut VCC peut être obtenu à partir de la tension V_{RECT}. On appelle V_{DZ0} la tension entre la cathode et l'anode de la diode Zener D_{Z0}, V_{DZ1} la tension entre la cathode et l'anode de la diode Zener D_{Z1}, et V_{THM1} la tension de seuil des transistors M_{1A} et M_{1B}.

Le transistor M₀ est un transistor déplété, c'est-à-dire avec une tension de seuil V_{T} négative. Lorsque la tension V_{RECT} est supérieure strictement à la somme des tensions V_{DZ0}, V_{DZ1} et V_{THM1}, un courant circule dans le transistor M_{1A} et est copié dans le transistor M_{1B}. Le signal PWM_{B} est alors à l'état bas, tiré au potentiel de référence bas par le transistor M_{1B}. Si la tension V_{RECT} est inférieure strictement à la somme des tensions V_{DZ0}, V_{DZ1} et V_{THM1}, aucun courant ne circule dans le transistor M_{1B}. Le signal PWM_{B} est alors à l'état haut, tiré au potentiel de référence haut V_{CC} par la résistance R_{B}. La tension de seuil V_{TH} du module 94 est déterminée par les tensions de seuil des diodes Zener D_{Z0} et D_{Z1} et la tension de seuil V_{THM1} du transistor M_{1A}.

Selon un autre exemple, le module 94 compare la tension V_{RECT} à deux seuils selon un cycle à hystérésis.

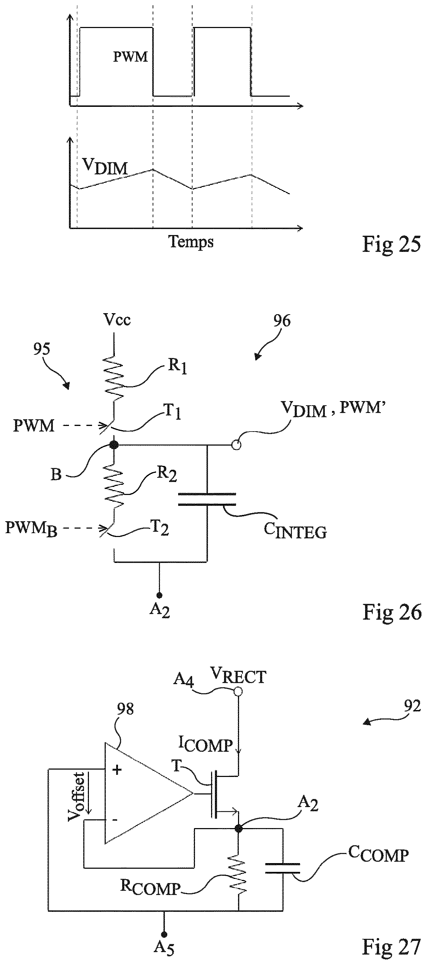

La figure 25 représente un chronogramme de la tension V_{DIM} et de la tension PWM.

La figure 26 est un schéma électrique d'un mode de réalisation du module 95 de modulation dans lequel la tension V_{REF} correspond au potentiel de référence haut VCC et du module d'intégration 96 permettant d'obtenir les signaux du chronogramme représenté en figure 25. Dans ce mode de réalisation, les tensions V_{DIM} et PWM' sont confondues.

Selon un mode de réalisation, les modules de modulation 95 et d'intégration 96 comprennent une résistance R₁ et un interrupteur T₁ en série entre la source du potentiel de référence haut V_{CC} et un noeud B. L'interrupteur T₁ est commandé par le signal PWM. Les modules de modulation 95 et d'intégration 96 comprennent, en outre, une résistance R₂ et un interrupteur T₂ en série entre le noeud B et le noeud A₂. L'interrupteur T₂ est commandé par le signal PWM_{B}. Le module d'intégration 96 comprend, en outre, un condensateur C_{INTEG} monté entre le noeud B et le noeud A₂. La tension V_{DIM} correspond à la tension aux bornes du condensateur C_{INTEG}.

Le rapport entre les résistances R₁ et R₂ permet de régler le taux de modulation et donc la valeur moyenne du signal V_{DIM} modulé et filtré.

La figure 27 est un schéma électrique d'un mode de réalisation du module 92. Le module 92 comprend un transistor MOS T, par exemple à canal N, dont la source est connectée au noeud A₂ et dont le drain est connecté au noeud A₄. Le module 92 comprend, en outre, un condensateur C_{COMP} et une résistance R_{COMP} en parallèles disposés entre le noeud A₂ et le noeud A₅. Le module 92 comprend, en outre, un amplificateur différentiel 98 dont l'entrée non inverseuse (+) est connectée au noeud A₅, dont l'entrée inverseuse (-) est connectée au noeud A₂ et dont la sortie commande la grille du transistor T. La tension V_{offset} est la tension entre les entrées (+) et (-) de l'amplificateur 98. Le courant I_{COMP} est le courant au drain du transistor T.

Le module 92 permet de tirer un courant minimum sur le secteur en plaçant une résistance R_{COMP} entre la masse du circuit de commutation 16 (potentiel GNDA au noeud A₂) et la masse du pont redresseur 12 (potentiel GND au noeud A₅). Ainsi, si aucun courant n'est tiré sur le secteur par le circuit de commutation 16, un courant I_{COMP} de valeur Voffset/R_{COMP} est tiré sur le secteur. Un pic en courant I_{COMP} permet d'amorcer le gradateur 82 en chargeant le condensateur C_{COMP} en début de front montant sur la tension V_{RECT}. Un courant constant I_{COMP} dans la résistance R_{COMP} permet de maintenir l'état du gradateur en tirant un courant I_{COMP} de maintien, ajustable grâce à la résistance R_{COMP}. Quand le secteur alimente les diodes électroluminescentes, un courant au minimum égal à V_{offset}/R_{COMP} est tiré sur le secteur.

Des modes de réalisation particuliers ont été décrits. Diverses variantes et modifications apparaîtront à l'homme de l'art. Bien que des modes de réalisation détaillés aient été décrits comprenant un seul condensateur Cap, un ou plusieurs condensateurs supplémentaires peuvent être prévus. Par exemple, un condensateur supplémentaire peut être ajouté en parallèle d'un ensemble de diodes électroluminescentes globales successives. En outre, bien que des modes de réalisation détaillés aient été décrits dans lesquels l'état de conduction le moins conducteur électriquement de chaque circuit de conduction SWᵢ correspond à un état non passant, il est clair que ces modes de réalisation peuvent également être mis en oeuvre avec un circuit de conduction SWᵢ pour lequel l'état le moins conducteur électriquement correspond néanmoins à un état dans lequel du courant circule au travers du circuit SWᵢ, par exemple un courant dont l'intensité est inférieure ou égale à la limite théorique qui est l'intensité maximale induisant une puissance dans le circuit de conduction SWᵢ pouvant être dissipée sans causer de dysfonctionnement de celui-ci. En outre, bien que dans les modes de réalisation décrits précédemment, les interrupteurs SW₁ à SW_{N} soient reliés à une seule source de courant, il est clair que plusieurs sources de courant peuvent être prévues. A titre d'exemple, une source de courant peut être prévue par interrupteur SWᵢ ou bien une source de courant peut être prévue par paire d'interrupteur SWᵢ, etc.

## Revendications

1. Circuit optoélectronique (20) destiné à recevoir, entre un premier noeud (A1 , A4) et un deuxième noeud (A2 , A5), une tension variable (VRECT) contenant une alternance de phases positives croissantes et de phase positives décroissantes, le circuit optoélectronique comprenant :
- une pluralité de diodes électroluminescentes (Di) montées en série entre le premier noeud et un troisième noeud ;
- un premier circuit de limitation/régulation (14) du courant monté entre le troisième noeud et le deuxième noeud ;
- un circuit de commutation (16) reliant le troisième noeud à au moins certaines diodes électroluminescentes de la pluralité de diodes électroluminescentes, le circuit de commutation (16) comprenant un deuxième circuit de limitation/régulation (38) du courant ;
- un condensateur (Cap) comprenant des première et deuxième armatures, la première armature du condensateur (Cap) étant reliée au premier noeud (A1, A4); et **caractérisé en ce que** le circuit optoélectronique comprend :
- une première diode (D0D) dont la cathode est connectée à la deuxième armature et dont l'anode est reliée au deuxième noeud ; et
- une deuxième diode (D0C) dont l'anode est connectée à la deuxième armature et dont la cathode est reliée à un deuxième circuit de limitation/régulation (38) du courant.

2. Circuit optoélectronique selon la revendication 1, dans lequel la pluralité de diodes électroluminescentes (Di) montées en série comprend une première diode électroluminescente (D1) dont l'anode est connectée au premier noeud (A1), l'anode de la troisième diode (D0A) étant connectée à la cathode de la première diode électroluminescente.

3. Circuit optoélectronique selon la revendication 1 ou 2, dans lequel le circuit de commutation (16) comprend, pour chaque diode électroluminescente (Di) parmi les diodes électroluminescentes reliées au circuit de commutation (16), un circuit de conduction (SWi) du courant reliant le troisième noeud (A3) à la cathode de la diode électroluminescente et adapté à prendre au moins des premier et deuxième états, le circuit de conduction dans le premier état étant moins conducteur électriquement que dans le deuxième état.

4. Circuit optoélectronique selon la revendication 3, dans lequel le circuit de commutation (16) comprend, en outre, un circuit de conduction (SWi) du courant reliant le troisième noeud (A3) à la cathode de la deuxième diode (D0C).

5. Circuit optoélectronique selon l'une quelconque des revendications 1 à 4, dans lequel le premier circuit de limitation/régulation (14) du courant comprend une première source de courant adaptée à fournir un courant dont l'intensité dépend d'une consigne (VDIM).

6. Circuit optoélectronique selon la revendication 5, comprenant un premier circuit (94) adapté à recevoir ladite tension variable (VRECT) et à fournir un signal binaire (PWM) modulé en largeur d'impulsion.

7. Circuit optoélectronique selon la revendication 6, comprenant un circuit de modulation et de filtrage (95, 96) adapté à recevoir le signal binaire (PWM) et à fournir la consigne (VDIM) dont la valeur moyenne dépend du rapport cyclique du signal binaire.

8. Circuit optoélectronique selon l'une quelconque des revendications 1 à 7, comprenant, en outre, un dispositif (92) de réduction de l'impédance vue entre le premier noeud (A4) et le deuxième noeud (A5).

9. Circuit optoélectronique selon la revendication 8, dans lequel le dispositif (92) de réduction d'impédance comprend un troisième circuit de limitation/régulation (RCOMP , CCOMP) du courant et un transistor (T) en série avec le troisième circuit de limitation/régulation du courant.

10. Circuit optoélectronique selon la revendication 9, dans lequel le dispositif (92) de réduction d'impédance comprend un module (98) adapté à commander le transistor (T) à partir de la tension aux bornes du troisième circuit de limitation/régulation du courant (RCOMP , CCOMP).

## Patentansprüche

1. Optoelektronischer Schaltkreis (20), der bestimmt ist, zwischen einem ersten Knoten (A1, A4) und einem zweiten Knoten (A2, A5) eine variable Spannung (VRECT) zu empfangen, welche eine Abfolge zunehmender positiver Phasen und abnehmender positiver Phasen enthält, wobei der optoelektronische Schaltkreis umfasst:
- eine Vielzahl elektrolumineszierender Dioden (Di), die zwischen dem ersten Knoten und einem dritten Knoten in Reihe angebracht sind;
- einen ersten Begrenzungs-/Regulierungsschaltkreis (14) des Stroms, der zwischen dem dritten Knoten und dem zweiten Knoten angebracht ist;
- einen Umschaltschaltkreis (16), der den dritten Knoten mit mindestens einigen elektrolumineszierenden Dioden von der Vielzahl elektrolumineszierender Dioden verbindet, wobei der Umschaltschaltkreis (16) einen zweiten Begrenzungs-/Regulierungsschaltkreis (38) des Stroms umfasst;
- einen Kondensator (Cap), umfassend eine erste und zweite Platte, wobei die erste Platte des Kondensators (Cap) mit dem ersten Knoten (A1, A4) verbunden ist und **dadurch gekennzeichnet, dass** der optoelektronische Schaltkreis umfasst:
- eine erste Diode (D0D), deren Kathode an die zweite Platte angeschlossen ist und deren Anode mit dem zweiten Knoten verbunden ist; und
- eine zweite Diode (D0C), deren Anode an die zweite Platte angeschlossen ist und deren Kathode mit einem zweiten Begrenzungs-/Regulierungsschaltkreis (38) des Stroms verbunden ist.

2. Optoelektronischer Schaltkreis nach Anspruch 1, wobei die Vielzahl der in Reihe angebrachten elektrolumineszierenden Dioden (Di) eine erste elektrolumineszierende Diode (D1) umfasst, deren Anode an den ersten Knoten (A1) angeschlossen ist, wobei die Anode der dritten Diode (D0A) an die Kathode der ersten elektrolumineszierenden Diode angeschlossen ist.

3. Optoelektronischer Schaltkreis nach Anspruch 1 oder 2, wobei der Umschaltschaltkreis (16) für jede elektrolumineszierende Diode (Di) von den elektrolumineszierenden Dioden, die mit dem Umschaltschaltkreis (16) verbunden sind, einen Leitungsschaltkreis (SWi) des Stroms umfasst, der den dritten Knoten (A3) mit der Kathode der elektrolumineszierenden Diode verbindet und geeignet ist, mindestens einen ersten und zweiten Zustand anzunehmen, wobei der Leitungsschaltkreis in dem ersten Zustand weniger elektrisch leitend als in dem zweiten Zustand ist.

4. Optoelektronischer Schaltkreis nach Anspruch 3, wobei der Umschaltschaltkreis (16) ferner einen Leitungsschaltkreis (SWi) des Stroms umfasst, der den dritten Knoten (A3) mit der Kathode der zweiten Diode (D0C) verbindet.

5. Optoelektronischer Schaltkreis nach einem der Ansprüche 1 bis 4, wobei der erste Begrenzungs-/Regulierungsschaltkreis (14) des Stroms eine erste Stromquelle umfasst, die geeignet ist, einen Strom zu liefern, dessen Stärke von einem Sollwert (VDIM) abhängt.

6. Optoelektronischer Schaltkreis nach Anspruch 5, umfassend einen ersten Schaltkreis (94), der geeignet ist, die variable Spannung (VRECT) zu empfangen und ein impulsbreitenmoduliertes binäres Signal (PWM) zu liefern.

7. Optoelektronischer Schaltkreis nach Anspruch 6, umfassend einen Modulations- und Filterschaltkreis (95, 96), der geeignet ist, das binäre Signal (PWM) zu empfangen und den Sollwert (VDIM) zu liefern, dessen mittlerer Wert vom zyklischen Verhältnis des binären Signals abhängt.

8. Optoelektronischer Schaltkreis nach einem der Ansprüche 1 bis 7, ferner umfassend eine Reduziervorrichtung (92) der zwischen dem ersten Knoten (A4) und dem zweiten Knoten (A5) gesehenen Impedanz.

9. Optoelektronischer Schaltkreis nach Anspruch 8, wobei die Impedanzreduziervorrichtung (92) einen dritten Begrenzungs-/Regulierungsschaltkreis (RCOMP, CCOMP) des Stroms und einen Transistor (T) in Reihe mit dem dritten Begrenzungs-/Regulierungsschaltkreis des Stroms umfasst.

10. Optoelektronischer Schaltkreis nach Anspruch 9, wobei die Impedanzreduziervorrichtung (92) ein Modul (98) umfasst, das geeignet ist, den Transistor (T) ausgehend von der Spannung an den Klemmen des dritten Begrenzungs-/Regulierungsschaltkreises des Stroms (RCOMP, CCOMP) zu steuern.

## Claims

1. An optoelectronic circuit (20) intended to receive, between a first node (A₁, A₄) and a second node (A₂, A₅), a variable voltage (V_{RECT}) containing an alternation of increasing positive phases and of decreasing positive phases, the optoelectronic circuit comprising:
- a plurality of light-emitting diodes (Dᵢ) mounted in series between the first node and a third node;
- a first circuit for limiting/regulating (14) the current mounted between the third node and the second node;
- a switching circuit (16) linking the third node to at least some light-emitting diodes of the plurality of light-emitting diodes, the switching circuit (16) comprising a second circuit for limiting/regulating (38) the current;
- a capacitor (Cap) comprising first and second plates, the first plate of the capacitor (Cap) being linked to the first node (A₁, A₄); and **characterized in that** the optoelectronic circuit comprises:
- a first diode (D_{0D}) whose cathode is connected to the second plate and whose anode is linked to the second node; and
- a second diode (D_{0C}) whose anode is connected to the second plate and whose cathode is linked to a second circuit for limiting/regulating (38) the current.

2. The optoelectronic circuit according to claim 1, wherein the plurality of light-emitting diodes (Dᵢ) mounted in series comprises a first light-emitting diode (D₁) whose anode is linked to the first node (A₁), the anode of the third diode (D_{0A}) being connected to the cathode of the first light-emitting diode.

3. The optoelectronic circuit according to claim 1 or 2, wherein the switching circuit (16) comprises, for each light-emitting diode (Dᵢ) among the light-emitting diodes linked to the switching circuit (16), a circuit for conducting (SWᵢ) the current linking the third node (A₃) to the cathode of the light-emitting diode and adapted to assume at least first and second states, the conduction circuit in the first state being less electrically conductive than in the second state.

4. The optoelectronic circuit according to claim 3, wherein the switching circuit (16) further comprises a circuit for conducting (SWᵢ) the current linking the third node (A₃) to the cathode of the second diode (D_{0C}).

5. The optoelectronic circuit according to any one of claims 1 to 4, wherein the first circuit for limiting/regulating (14) the current comprises a first current source adapted to provide a current whose intensity depends on a setpoint (V_{DIM}).

6. The optoelectronic circuit according to claim 5, comprising a first circuit (94) adapted to receive said variable voltage (V_{RECT}) and to provide a pulse width modulated (PWM) binary signal.

7. The optoelectronic circuit according to claim 6, comprising a modulation and filtering circuit (95, 96) adapted to receive the binary signal (PWM) and to provide the setpoint (VDIM) whose average value depends on the duty cycle of the binary signal.

8. The optoelectronic circuit according to any one of claims 1 to 7, further comprising a device (92) for reducing the impedance viewed between the first node (A₄) and the second node (A₅).

9. The optoelectronic circuit according to claim 8, wherein the impedance reduction device (92) comprises a third circuit for limiting/regulating (R_{COMP}, C_{COMP}) the current and a transistor (T) in series with the third circuit for limiting/regulating the current.

10. The optoelectronic circuit according to claim 9, wherein the impedance reduction device (92) comprises a module (98) adapted to control the transistor (T) from the voltage across the third circuit for limiting/regulating the current (R_{COMP}, C_{COMP}).
